# EUROPEAN PATENT APPLICATION

(11) **EP 1 338 411 A1**
(43) Date of publication of application: **27.08.2003**
(21) Application number: 02380040.2
(22) Date of filing: 22.02.2002
(51) Int. Cl.: B30B 15/06

(54) **Vulcanizing press for conveyor belts**

(71) Applicant: Foncilla Abizanda, Antonio, 23009 Jaen (ES)
(72) Inventor: Foncilla Abizanda, Antonio, 23009 Jaen (ES)
(74) Representative: Esteban Perez-Serrano, Maria Isabel

(57) **Abstract**

The vulcanizing press for conveyor belts incorporates between the half-case (1) or (4) and the corresponding wing of the press, a pneumatic or hydraulic pad (2) or (3) which together with the corresponding pad (3) or (2) placed on the other half-case (4) or (1) allows to vulcanize the belt (5) in a horizontal plane, by compensating during said vulcanization the pressure-induced deformations of the press case.

## Description

### OBJECT OF THE INVENTION

The invention disclosed herein consists of a vulcanizing press for conveyor belts, from among vulcanizing presses for the joints of said conveyor belts.

The invention is characterized by a special construction of the press, which incorporates beneath its lower or upper half-case a pneumatic pad which together with the conventional upper-press system allows to vulcanize the belt in a horizontal plane, even when the case is deformed by pressure during vulcanization.

### BACKGROUND OF THE INVENTION

Vulcanizing presses are well known and widely used, with diverse registrations existing in relation to them.

All conventional presses are made from cast aluminum, for reasons of weight and transportability to their location of use, and all suffer from the same drawback, that is, the bulging deformation of their central area due to the pressure applied by the internal pad inserted in the top or bottom part of the clamp, which is generally pneumatic.

This pressure, due to the excessive width required to embrace the belt, causes said belt to warp and thus to lose its horizontal disposition, so that the vulcanization is not performed on the initially intended surface but rather on a different surface which is more or less deformed by this bulging of the press.

The applicant is not aware of the existence of any presses with the characteristics described herein, which eliminate the above described drawback.

### DESCRIPTION OF THE INVENTION

The invention which is the object of the present memory relates to a vulcanizing press for conveyor belts, from among vulcanizing presses for the joints of conveyor belts, characterized by incorporating in its upper or lower half-case a pad actuated by pneumatic or hydraulic pistons which, together with the conventional pad of the upper or lower half-case, allow vulcanization of the belt in a horizontal plane by compensating the pressure-induced deformations of the pressure case and the clamp wing during vulcanization.

### DESCRIPTION OF THE DRAWINGS

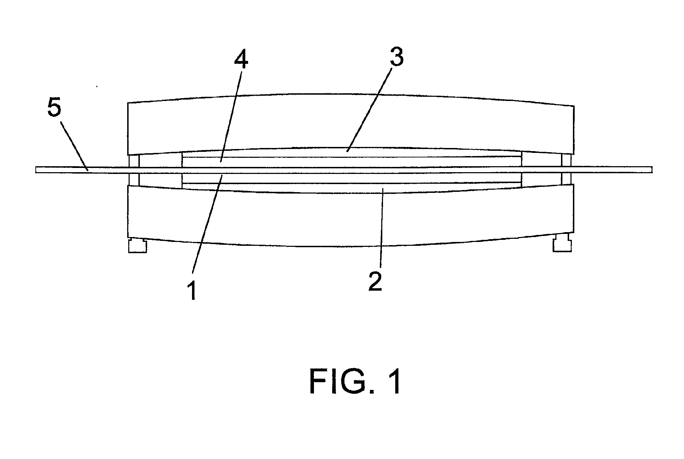

The present descriptive memory is complemented with a drawing for purposes of illustration of the preferred embodiment and in no case limiting the invention, specifically Figure 1 corresponds to a cross section of the press showing the two pneumatic pads deforming the half-cases of the press symmetrically, and with the conveyor belt maintaining its horizontal position during the vulcanization.

### PREFERRED EMBODIMENT OF THE INVENTION

In view of the above statements the present invention relates to a vulcanizing press for conveyor belts, from among vulcanizing presses for the joints of conveyor belts made of aluminum and having a pair of hot platens with reinforced electrical resistors, in the form of corresponding aluminum half-cases, characterized by incorporating between its lower half-case (1) and the corresponding wing of the clamp a pad (2) which receives the pressure of a pneumatic or hydraulic piston and which together with the conventional pad (3) placed above the upper half-case (4) allows to vulcanize the belt (5) in a horizontal plane, by compensating the deformation of the press case due to the pressure applied during vulcanization.

The essence of this invention is not altered by variations in the materials, shape, size and arrangement of the component elements, described in a non-limiting manner, being sufficient for its reproduction by an expert in the field.

## Claims

1. Vulcanizing press for conveyor belts, from among vulcanizing presses for the joints of conveyor belts having heating half-cases made of aluminum, **characterized by** incorporating, between the half-case (1) or (4) and the corresponding wing of the press, a new pneumatic or hydraulic pad (2) or (3) which together with the corresponding pad (3) or (2) placed on the other half-case (4) or (1) allows to vulcanize the belt (5) in a horizontal plane, by compensating during said vulcanization the pressure-induced deformations of the press case.
